Europäisches Patentamt

European Patent Office

Office européen des brevets

(11) Numéro de publication: **0 381 105 B1**

## FASCICULE DE BREVET EUROPEEN

(45) Date de publication de fascicule du brevet: **03.08.94**   (51) Int. Cl.5: **H04M 19/00**

(21) Numéro de dépôt: **90101697.2**

(22) Date de dépôt: **29.01.90**

(54) **Dispositif électronique de raccordement de ligne d'abonné.**

(30) Priorité: **31.01.89 FR 8901173**

(43) Date de publication de la demande:
**08.08.90 Bulletin 90/32**

(45) Mention de la délivrance du brevet:
**03.08.94 Bulletin 94/31**

(84) Etats contractants désignés:
**AT BE CH DE DK ES FR GB IT LI NL SE**

(56) Documents cités:
EP-A- 0 048 477      EP-A- 0 096 756
EP-A- 0 112 731      GB-A- 2 091 973
GB-A- 2 093 314      US-A- 4 567 331

(73) Titulaire: **ALCATEL CIT**
**12 Rue de la Baume**
**F-75008 Paris(FR)**

(72) Inventeur: **Cotty, Joel**
**Ker-Noel, Saint Ouay Perros**
**F-22700 Perros Guirec(FR)**

(74) Mandataire: **Weinmiller, Jürgen et al**
**Lennéstrasse 9**
**Postfach 24**
**D-82336 Feldafing (DE)**

Rank Xerox (UK) Business Services
(3.10/3.09/3.3.3)

# Description

L'invention concerne l'alimentation d'un poste d'abonné à l'aide d'un joncteur électronique.

On connaît, par la demande de brevet français n° 88/12668 "Dispositif de raccordement de ligne d'abonné" du même inventeur, déposée le 28 septembre 1988, un dispositif qui est relié par un transformateur à la ligne d'abonné, et qui ne comporte pas de limitation de courant de ligne.

On connaît également par le brevet européen 0096756 "Joncteur d'abonné électronique", un dispositif qui ne comporte pas de transformateur, mais dont la complexité et l'utilisation de miroirs de courant font que ce joncteur ne peut être réalisé que sous forme de circuit intégré. De plus il faut rajouter des protections parallèles sur la ligne afin que les tensions sur les fils de la ligne ne dépassent en aucun cas les tensions d'alimentation du joncteur intégré ; ces dépassements sont dûs aux surcharges qui affectent la ligne. Ce joncteur ne comporte pas d'isolement galvanique entre le potentiel OV de la batterie et la masse logique, ce qui interdit, même lors de surcharges affectant la ligne, d'avoir des différences de potentiels supérieures à 2 volts entre le potentiel OV et la masse logique.

Le but de l'invention est de réaliser un dispositif électronique de raccordement de ligne d'abonné qui ne présente pas les inconvénients du joncteur électronique connu.

Un autre but de l'invention est de réaliser un dispositif de raccordement qui utilise des composants discrets et soit adapté à la technique de montage en surface (technique CMS). Un autre but de l'invention est de réaliser un dispositif de raccordement de faible consommation.

Un autre but de l'invention est de réaliser un dispositif de raccordement ne nécessitant pas d'autres protections parallèles que celle des résistances variables avec la tension, VDR, existant au niveau de la ligne d'abonné.

L'invention a pour objet un dispositif de raccordement de ligne d'abonné relié à un circuit d'émission et à un circuit de réception, à un fil de la ligne par un premier contact fixe, un premier contact mobile d'un relais de sonnerie et une première résistance, à un autre fil de la ligne par un deuxième contact fixe, un deuxième contact mobile dudit relais de sonnerie et une deuxième résistance, et ayant un dispositif de signalisation d'état de boucle relié aux bornes des première et deuxième résistances et délivrant un signal de boucle, ledit circuit d'émission étant relié par une troisième résistance à la première résistance et par une quatrième résistance à la deuxième résistance, caractérisé par le fait qu'il comprend également :
- un premier et un deuxième circuits amplificateurs différentiels reliés en entrée audit circuit de réception,
- un premier circuit amplificateur symétrique relié en sortie du premier circuit amplificateur différentiel par une cinquième résistance et ayant une sortie reliée à la première résistance,
- un deuxième circuit amplificateur symétrique relié en sortie du deuxième circuit amplificateur différentiel par une sixième résistance et ayant une sortie reliée à la deuxième résistance,
- un premier circuit de réaction en parallèle sur un ensemble constitué par le premier circuit amplificateur symétrique et la première résistance,
- un deuxième circuit de réaction en parallèle sur un ensemble constitué par le deuxième circuit amplificateur symétrique et la deuxième résistance,
- un circuit d'équilibrage relié en sortie des premier et deuxième circuits amplificateurs différentiels, à un premier point commun au circuit d'émision et à la troisième résistance, et à un deuxième point commun au circuit d'émission et à la quatrième résistance, et
- un circuit d'alimentation et de filtrage pour filtrer la tension d'une batterie et alimenter par une chaîne d'alimentation les deuxième et premier circuits amplificateurs symétriques, ledit circuit d'alimentation et de filtrage étant relié au potentiel négatif de la batterie et ledit premier circuit amplificateur symétrique étant relié au potentiel positif de la batterie.

L'invention sera bien comprise par la description qui va suivre d'un exemple de réalisation illustré par les figures annexées dans lesquelles :
- la figure 1 est un schéma d'un dispositif de raccordement de l'invention,
- la figure 2 est un schéma d'un dispositif de signalisation d'état de boucle de la figure 1.

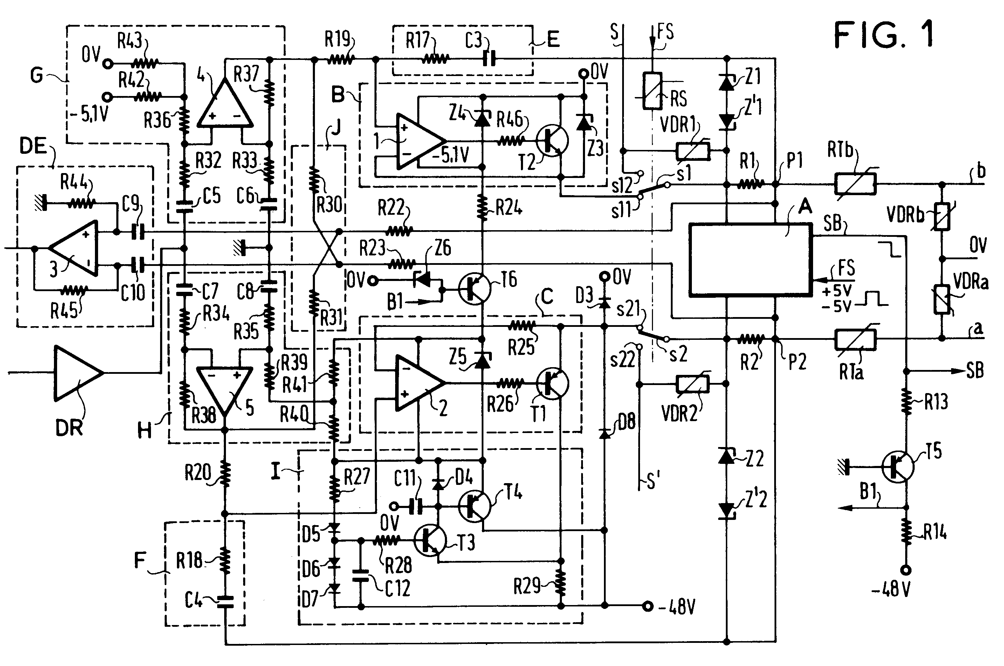

Le dispositif de raccordement de l'invention, représenté figure 1, comporte :
- un dispositif de signalisation d'état de boucle d'abonné A,
- deux circuits amplificateurs symétriques B et C,
- un circuit d'émission DE et un circuit de réception DR,
- deux circuits de réaction E et F associés respectivement aux circuits amplificateurs B et C,
- deux circuits amplificateurs différentiels G et H,
- un circuit d'alimentation et de filtrage I pour filtrer la tension de batterie, et
- un circuit d'équilibrage J.

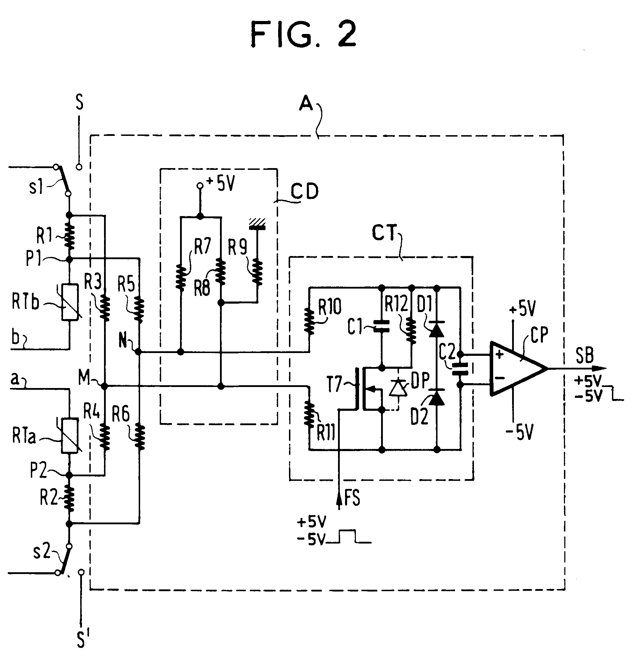

Le dispositif de signalisation d'état de boucle d'abonné est par exemple celui ayant fait l'objet de la demande de brevet français n° 8815417 déposée le 25 novembre 1988 et dont l'inventeur est le même que celui de la présente demande ; ce dispositif est représenté figure 2.

La ligne d'abonné comporte deux fils a et b reliés chacun au potentiel OV d'une batterie par une résistance variable avec la tension, VDRa, VDRb.

Le fil b est relié par une résistance RTb à coefficient de température positif (CTP) et une résistance R1 en série à un contact mobile s1 d'un relais de sonnerie RS ; le fil a est relié par une résistance RTa à coefficient de température positif et une résistance R2 en série à un autre contact mobile s2 du relais de sonnerie. Au repos, le relais de sonnerie RS ne recevant pas de signal d'information de sonnerie FS, le contact mobile s1 coopère avec un contact fixe s11 et le contact mobile s2 coopère avec un contact fixe s21 ; en position travail, le relais de sonnerie RS recevant un signal d'information de sonnerie FS, les contacts mobiles s1 et s2 coopèrent avec des contacts fixes s12 et s22 reliés à deux générateurs de sonnerie délivrant des signaux S et S′ symétriques, et en série avec la batterie.

Deux diodes zener Z1 et Z′1 montées en série et en opposition, sont connectées en parallèle sur la résistance R1, et une résistance variable avec la tension VDR1 est connectée entre le contact mobile s1 et le contact fixe s12.

Deux diodes zéner Z2 et Z′2 montées en série et en opposition sont connectées en parallèle sur la résistance R2, et une résistance variable avec la tension VDR2 est connectée entre le contact mobile s2 et le contact fixe s22.

Les résistances VDRa et VDRb protègent la ligne d'abonné contre les surcharges brèves de forte amplitude (foudre) ; les résistances RTa et RTb limitent le courant de ligne en cas de court-circuit ; les résistances VDR1 et VDR2 limitent, en phase sonnerie, la tension d'arc apparaissant d'une part entre le contact mobile s1 et le contact fixe s12 et d'autre part entre le contact mobile s2 et le contact fixe s22, ces tensions d'arc perturbant le fonctionnement des amplificateurs d'émission et de réception ; les diodes zéner Z1 et Z′1 servent à limiter la tension aux bornes de la résistance R1, et les diodes zéner Z2 et Z′2 servent à limiter la tension aux bornes de la résistance R2, en cas de surcharge sur la ligne.

Le dispositif de signalisation d'état de boucle A est relié aux bornes des résistances R1 et R2, et reçoit un signal d'information de sonnerie FS ; il délivre un signal d'état de boucle SB, qui permet également la mise en "power-down" du joncteur en l'absence de boucle, à un circuit série constitué d'une résistance R13, d'un transistor de commande T5, et d'une résistance R14, le transistor ayant son émetteur relié à la résistance R13, sa base reliée à la masse et son collecteur relié à la résistance R14 elle même reliée au potentiel -48V de la batterie. Le collecteur délivre un signal d'information de boucle B1 ; en l'absence de boucle (ligne ouverte) le signal d'état de boucle SB est au niveau haut +5V, le transistor T5 est passant ; suite à une détection de boucle le signal SB passe au niveau bas -5V, ce qui bloque le transistor T5, et le signal B1 passe au niveau -48V.

Le circuit amplificateur symétrique B comprend un amplificateur 1, une diode zéner de protection Z3, une diode zéner d'alimentation Z4, un transistor T2 et une résistance R46. Les diodes zéner ont leur cathode reliées au potentiel OV de la batterie. L'entrée négative de l'amplificateur 1, l'émetteur de T2 et l'anode de la diode zéner Z3 sont reliés au contact fixe s11. L'anode et la cathode de la diode zéner Z4 sont connectées aux bornes d'alimentation de l'amplificateur 1 dont la sortie est reliée par la résistance R46 à la base du transistor T2 ; le collecteur de T2 est relié au potentiel OV. La diode zéner Z3 et la résistance R46 protègent l'amplificateur 1.

Le circuit de réaction E comprend une résistance R17 en série avec un condensateur C3, la résistance étant reliée à l'entrée positive de l'amplificateur 1 et le condensateur étant relié à un point P1 commun aux résistances R1 et RTb.

Le circuit amplificateur symétrique C comprend un amplificateur 2, une diode zéner d'alimentation Z5, deux résistances R25 et R26 et un transistor T1. L'entrée négative de l'amplificateur 2 est reliée par la résistance R25 au contact fixe s21 lui même relié au potentiel OV par une diode D3 ; le transistor T1 a son émetteur relié au contact fixe s21 et sa base reliée par la résistance R26 à la sortie de l'amplificateur 2. L'anode et la cathode de la diode zéner Z5 sont reliées aux bornes d'alimentation de l'amplificateur 2.

Les résistances R25 et R26 protègent l'amplificateur 2.

Les deux circuits amplificateurs symétriques B et C sont reliés par un transistor d'alimentation T6 et une résistance R24 en série. Le transistor T6 a son collecteur relié à la cathode de la diode zéner Z5, son émetteur relié à la résistance R24 elle même reliée à l'anode de la diode zéner Z4, et sa base reliée d'une part au potentiel positif OV de la batterie par une diode zéner de protection Z6 et d'autre part au collecteur du transistor de commande T5 duquel elle reçoit le signal d'information de boucle B1. Les diodes zéner d'alimentation Z4 et Z5, le transistor d'alimentation T6 et la résistance R24 constituent une chaîne d'alimentation reliée au potentiel positif OV de la batterie et au circuit d'alimentation et de filtrage I.

Le circuit de réaction F comprend une résistance R18 en série avec un condensateur C4, la résistance étant reliée à l'entrée positive de l'amplificateur 2 et le condensateur étant relié à un point P2 commun aux résistances R2 et RTa.

Le circuit de filtrage I de la tension batterie comprend deux transistors T3 et T4, trois résistances R27, R28, R29, deux condensateurs C11, C12 et quatre diodes D4, D5, D6, D7. Le transistor T4 a son émetteur relié à l'anode de la diode zéner Z5, son collecteur relié au potentiel -48V, et sa base reliée d'une part à son émetteur par la diode D4 et d'autre part au potentiel OV par le condensateur C11. Le transistor T3 a son collecteur relié à la base de T4 ; la résistance R29 relie le collecteur du transistor T1 et l'émetteur du transistor T3 au potentiel -48V. La résistance R27 est en série avec les diodes D5, D6, D7, la résistance étant reliée à l'émetteur du transistor T4, la cathode de la diode D7 étant reliée au potentiel -48V ; le condensateur C12 est en parallèle sur les diodes D6 et D7, et le transistor T3 est protégé par la résistance R28 connectée entre sa base et un point commun aux diodes D5 et D6.

D'autre part le potentiel -48V est relié par une diode D8 au contact fixe s21 lui même relié par la diode D3 au potentiel OV ; les diodes D3 et D8 limitent l'excursion d'une perturbation entre les potentiels OV et -48V.

Le circuit d'émission DE comprend un cofidec 3, deux résistances R44 et R45, et deux condensateurs C9 et C10. L'entrée positive du cofidec est reliée d'une part à la masse par la résistance R44 et d'autre part au condensateur C9 ; l'entrée négative du cofidec est reliée d'une part au condensateur C10 et d'autre part à sa sortie par la résistance R45. Le condensateur C9 est relié par une résistance R22 au point P1, le condensateur C10 étant relié par une résistance R23 au point P2.

Le circuit de réception DR est un cofidec relié en sortie aux deux circuits amplificateurs différentiels G et H.

Le circuit amplificateur différentiel G comprend un amplificateur 4, six résistances, R32, R33, R36, R37, R42, R43, et deux condensateurs C5, C6. L'amplificateur 4 a son entrée positive reliée par la résistance R36 d'une part à une résistance R43 elle même reliée au potentiel OV et d'autre part à une résistance R42 elle même reliée à l'anode de la diode zéner Z4 dont le potentiel est de -5,1V ; l'entrée positive est également reliée, par la résistance R32 et le condensateur C5 en série, à la sortie du circuit de réception DR. L'entrée négative et la sortie de l'amplificateur 4 sont reliées par la résistance R37 ; l'entrée négative est également reliée à la masse par la résistance R33 et le condensateur C6 en série ; la sortie est également reliée par une résistance R19 à l'entrée positive de l'amplificateur 1.

Le circuit amplificateur différentiel H comprend un amplificateur 5, six résistances R34, R35, R38, R39, R40, R41, et deux condensateurs C7, C8. L'amplificateur 5 a son entrée négative reliée, par la résistance R34 et le condensateur C7 en série, à la sortie du circuit de réception DR ; l'entrée négative et la sortie de l'amplificateur 5 sont reliées par la résistance R38 ; l'entrée positive est reliée à la masse par la résistance R35 et le condensateur C8 en série ; les résistances R40 et R41 sont en série et constituent un pont diviseur connecté en parallèle sur la diode zéner Z5 ; l'entrée positive de l'amplificateur 5 est reliée par la résistance R39 à un point commun aux résistances R40 et R41 ; la sortie de l'amplificateur 5 est reliée par une résistance R20 à l'entrée positive de l'amplificateur 2.

Le circuit d'équilibrage J comporte deux résistances R30, R31. La résistance R30 est connectée entre la sortie de l'amplificateur 4 et un point commun à la résistance R23 et au condensateur C10 ; la résistance R31 est connectée entre la sortie de l'amplificateur 5 et un point commun à la résistance R22 et au condensateur C9.

L'alimentation des amplificateurs 4 et 5 n'a pas été représentée sur la figure 1 afin de ne pas la surcharger ; les bornes d'alimentation de l'amplificateur 4 sont reliées aux bornes de la diode zéner Z4 dont l'anode est à un potentiel -5,1 volts par rapport au potentiel OV ; les bornes d'alimentation de l'amplificateur 5 sont reliées aux bornes de la diode zéner Z5 dont la tension entre ses bornes est de 5,1 volts.

La figure 2 représente le dispositif de signalisation d'état de boucle d'abonné A de la figure 1, ayant fait l'objet d'une demande de brevet français n° 8815417 le 25 novembre 1988, comme déjà indiqué. Deux résistances R3 et R4 en série sont connectées entre le contact mobile s1 et le point P2 ; deux autres résistances R5 et R6 en série sont connectées entre le point P1 et le contact mobile s2. Un point M commun aux résistances R3 et R4 est relié à la masse par une résistance R9 et à une tension de +5V par une résistance R8 ; un point N commun aux résistances R5 et R6 est relié à ladite tension +5V par une résistance R7.

Les résistances R3 à R6 constituent avec les résistances R1 et R2 un circuit de prélèvement de l'image du courant de ligne, les résistances R1 et R2 servant à prélever l'image du courant de ligne et les résistances R3 et R4 d'une part et R5 et R6 d'autre part constituant deux branches dudit circuit, ces résistances R3 à R6 étant égales et de forte valeur, plusieurs centaines de milliers d'ohms. Les résistances R3 à R6 effectuent la demi-somme des tensions prélevées aux bornes des résistances R1 et R2, ce qui donne entre les points M et N l'image du courant de ligne. En l'absence des résistances R7 à R9 la tension apparaissant entre les points M et N est égale à celle présente aux bornes de la résistance R1 ou de la résistance R2.

Les résistances R7, R8 et R9 constituent un circuit de décalage CD qui sert à ramener les tensions présentes aux points M et N dans la zone de fonctionnement autorisée d'un comparateur CP. Le pont diviseur constitué par les résistances R8 et R9 permet d'obtenir au point M une tension de seuil en deçà de laquelle il n'est pas possible de détecter l'état de la boucle d'abonné. D'autre part la résistance présentée par la résistance R8 en parallèle sur la résistance R9 est égale à la résistance R7,

$$R7 = \frac{R8.R9}{R8+R9} \cdot$$

Les tensions aux points M et N sont négatives, par exemple de -2,6 et -3 volts, respectivement en l'absence de courant de ligne.

Le comparateur CP est relié en entrée aux points M et N par un circuit de commutation CT, constitué par un transistor T7, un condensateur C1, des résistances R10, R11 et R12 et deux diodes D1, D2. La résistance R10 est connectée entre le point N et l'entrée positive du comparateur CP ; la résistance R11 est connectée entre le point M du circuit de prélèvement et l'entrée négative du comparateur CP ; les entrées du comparateur sont reliées par un condensateur C2.

Un circuit constitué du condensateur C1 en série avec le transistor T7 et de la résistance R12 en parallèle sur le condensateur Ce est connecté aux entrées du comparateur, le condensateur étant relié à l'entrée positive et le transistor à l'entrée négative ; les deux diodes D1 et D2 sont montées en série, la diode D2 ayant son anode reliée à l'entrée négative du comparateur, et la diode D1 ayant sa cathode reliée à l'entrée positive du comparateur.

Le transistor T7 est du type VMOS et joue le rôle d'interrupteur ; à l'état passant il commute le condensateur en parallèle sur les entrées du comparateur CP ; le transistor T7 a sa grille reliée à un fil qui reçoit le signal FS d'information de sonnerie en même temps que le relais de sonnerie RS (figure 1) est commandé pour relier les fils a et b de la ligne d'abonné aux générateurs de sonnerie.

Lorsque le transistor T7 est passant, en phase sonnerie, il connecte le condensateur C1 en parallèle sur les entrées du comparateur CP, de sorte que la composante alternative du signal apparaissant aux points M et N est filtrée par le circuit résistances R10, R11 et condensateur C1, présentant une constante de temps C1 (R10 + R11). Cette constante de temps est nécessaire pour filtrer la composante alternative dûe au courant de sonnerie et ne conserver qu'un signal proportionnel à la valeur moyenne du courant de boucle, afin de permettre la détection de boucle en phase sonnerie. La résistance R12 de très forte valeur, 10 M ohms par exemple, ne sert qu'à fixer le potentiel aux bornes du condensateur C1. Les diodes D1 et D2 limitent la tension aux bornes du comparateur CP à environ 1 volt en présence d'un courant de ligne, ce qui permet de limiter la charge inverse du condensateur C1 à travers la diode parasite Dp du transistor T7, en présence d'une tension négative au point N.

En effet une tension inverse excessive aux bornes du condensateur C1 crée une information de boucle erronée temporaire à la fermeture du transistor T7 (commande à l'état passant) et ceci en l'absence de courant de ligne. La présence des diodes D1 et D2 limite la tension inverse aux bornes de C1 à une valeur d1 + d2-dp en présence d'une tension négative au point N, en désignant par d1, d2, dp les tensions aux bornes des diodes D1, D2 et DP en sens direct. Cette tension négative au point N par rapport au point M existe lorsqu'un abonné est en communication, le point N ayant un potentiel inférieur à celui du point M ; bien que le transistor T7 ne soit pas passant, le condensateur C1 se charge à travers la diode parasite DP du transistor. Si un signal de sonnerie est appliqué à la ligne lorsque l'abonné raccroche son combiné, le condensateur C1 n'a pas eu le temps de se décharger à travers la résistance R12, et le transistor T7 devenant passant, la tension du condensateur est appliquée aux bornes du comparateur CP qui interprète cette tension comme un signal de boucle d'abonné ; il s'agit évidement d'un signal de boucle parasite. La présence des diodes D1 et D2 limite donc la tension aux bornes du comparateur à environ 1 volt en présence d'un courant de ligne. Il faut remarquer que lorsque l'abonné raccroche son combiné le condensateur C1 se décharge dans la résistance R12 puis se charge dans l'autre sens puisqu'au repos, donc en l'absence de courant de ligne, le potentiel du point N est supérieur à celui du point M ; lorsqu'il y a un courant de ligne, c'est le potentiel du point M qui devient supérieur à celui du point N et le condensateur C1 se charge en sens inverse par rapport à l'état repos.

Le signal de boucle SB délivré par le comparateur passe de la valeur + 5 volts à la valeur - 5 volts lorsque la ligne est fermée.

Le dispositif de signalisation permet la détection d'état de boucle d'abonné avec ou sans courant de sonnerie.

L'isolement galvanique de la ligne d'abonné est assuré :

- dans le dispositif de signalisation d'état de boucle d'abonné A, par les résistance R3 à R6, de forte valeur,
- pour l'émission, par les résistances R22 et R23 égales et de forte valeur, en continu, et par les condensateurs C9 et C10 en alternatif,
- pour la réception par les circuits amplificateurs différentiels G et H, c'est-à-dire les amplificateur 4 et 5 et les composants associés.

Le relais de sonnerie RS permet de commuter la ligne, fils a et b, et les résistances R1 et R2 sur une tension alternative de 80 volts efficaces superposés à la tension batterie.

Les circuits amplificateurs symétriques B et C assurent l'alimentation de la ligne en courant continu, la transmission des signaux de réception, et participent à l'atténuation des signaux en retour, à l'émission et à la réception.

Le dispositif de signalisation d'état de boucle d'abonné A signale l'état de la boucle en mode normal ou en mode sonnerie, signal SB. Le transistor T6 est commandé par le signal B1 qui est au niveau haut + 0,3 volts lorsque la boucle d'abonné est ouverte, ce qui bloque le transistor T6 ; suite à une détection de boucle le signal B1 passe au niveau bas, ce qui rend le transistor T6 passant. La tension de la diode zéner Z6 étant par exemple de 11 volts, le niveau bas du signal B1 est de -11 volts. Les amplificateurs 1, 2, 4 et 5 ne sont donc alimentés qu'en présence du signal B1, ce qui permet de réduire la consommation du dispositif de raccordement.

Dès que le dispositif de signalisation de boucle A détecte la boucle d'abonné, le signal B1 rend le transistor T6 passant, et la ligne d'abonné est alimentée par l'intermédiaire des circuits amplificateurs symétriques B et C.

En émission les signaux émission présents sur la ligne aux points P1 et P2 sont appliqués à travers les résistances R22 et R23 au circuit d'émission DE ; dans le circuit d'émission les signaux d'émission sont appliqués par l'intermédiaire des condensateurs C9 et C10 à l'amplificateur différentiel du cofidec 3 et transposés par rapport à la masse par ledit amplificateur différentiel associé aux résistances R44 et R45.

En réception, les signaux réception issus du cofidec du circuit de réception DR sont d'abord transposés par rapport au potentiel OV par les deux amplificateurs différentiels 4 et 5 ; ces deux amplificateurs sont référencés au potentiel OV par : la résistance R43, la résistance R42 et la diode zéner Z4, pour l'amplificateur 4, les résistances R40, R41, la diode zéner Z5, le transistor T4 et le condensateur C11 pour l'amplificateur 5.

Les circuits amplificateurs symétriques B et C reçoivent les tensions continues d'alimentation de la ligne ainsi que des signaux basse fréquence en opposition de phase, issus des amplificateurs 4 et 5. Ces tensions continues sont référencées par rapport au potentiel OV et sont issues : pour le circuit amplificateur symétrique B du pont diviseur constitué par les résistances R42 et R43 du circuit amplificateur différentiel G, ce pont fixant la tension de déchet par rapport au potentiel OV, et pour le circuit amplificateur symétrique C du pont diviseur constitué par les résistances R40 et R41 du circuit amplificateur différentiel H, ce pont diviseur fixant la tension de déchet par rapport à un potentiel négatif résultant de la limitation du courant de ligne par le circuit de filtrage I.

Les circuits amplificateurs symétriques B et C transmettent le continu, l'alternatif, et synthétisent l'impédance de ligne à une valeur 2 x 300 ohms. Les résistances RTa et RTb, en série avec la ligne ayant chacune une valeur de 35 ohms, chaque circuit amplificateur symétrique B et C synthétise une impédance de 265 ohms ; ceci est réalisé par une réaction sur les amplificateurs 1 et 2 par les circuits de réaction E et F. Dans les circuits de réaction E et F, les condensateurs C3 et C4 évitent que le point de fonctionnement des amplificateurs 1 et 2 ne soit perturbé par la chute de tension dans les résistances R1 et R2, de 100 ohms chacune, chute créée par le courant de ligne. Cette méthode de synthétisation directe de l'impédance de ligne permet d'avoir une bonne atténuation des signaux en retour à l'émission et à la réception, d'où un gain plus précis du fait de la faible dispersion sur la tension de sortie des amplificateurs 1 et 2.

L'équilibrage 2 fils/4 fils est réalisé par les résistances R30 et R31 du circuit d'équilibrage J qui annulent respectivement les signaux provenant des résistances R22 et R23 en réception.

Le circuit de filtrage I de la tension batterie limite également le courant de ligne. Toute perturbation présente sur le potentiel -48V de la batterie est filtrée par le transistor T3, qui fonctionne en générateur de courant, et le condensateur C11 ; le transistor T4 transmet donc au point commun aux résistances R40 et R41 une tension continue par rapport au potentiel OV, ce point étant le "pied" du fil de ligne a.

La diode D5 est une diode antisaturation du transistor T3 ; en effet, pour des lignes longues le transistor T3 pourrait être saturé et la réjection du bruit d'alimentation au potentiel -48V deviendrait défectueuse. Le condensateur C12, de 0,1 microfarad, améliore la réjection du bruit surtout lorsque le transistor T3 tend vers la saturation. Le point commun aux résistances R42 et R43 du circuit amplificateur différentiel G est le "pied" du fil de ligne b, et il est filtré par la diode zéner Z4 du circuit amplificateur symétrique B.

La résistance R29 du circuit de filtrage I donne l'image du courant qui transite par le transistor T1 ; le générateur de courant, transistor T3, compare la tension aux bornes de la résistance R29 avec une tension de référence délivrée par les diodes D6 et D7 en série. Le résultat de la comparaison qui est filtré par le condensateur C11 ajuste le "pied" du fil a (point commun) aux résistances R40, R41) à une tension telle que le transistor T3 qui effectue la comparaison soit en équilibre. De cette manière le courant de ligne est limité à 27 mA par exemple.

Le dispositif de raccordement de l'invention permet donc l'utilisation de composants discrets pouvant être montés sur une carte de circuit imprimé selon la technique du montage en surface, d'où un coût moindre de réalisation d'un tel dispositif. La limitation du courant de ligne et l'alimentation des circuits uniquement en présence d'une information de boucle réduisent la consommation du dispositif de raccordement. D'autre part la limitation du courant de ligne rend inutile le changement des résistances R1 et R2 en série avec la ligne pour permettre au dispositif de raccordement de respecter les valeurs limites de courant qui sont variables d'un pays à l'autre.

Les caractéristiques de gain, de symétrie longitudinale et d'atténuation en retour (return loss) ont une faible dispersion.

Par ailleurs le dispositif de raccordement de l'invention rend l'emploi d'un survolteur inutile pour passer à une tension batterie de -54 volts lorsque cela est imposé par les normes de certains pays.

## Revendications

1. Dispositif de raccordement de ligne d'abonné relié à un circuit d'émission (DE) et à un circuit de réception (DR), à un fil de la ligne par un premier contact fixe (s11), un premier contact mobile (s1) d'un relais de sonnerie (RS) et une première résistance (R1), à un autre fil de la ligne par un deuxième contact fixe (s21), un deuxième contact mobile (s2) dudit relais de sonnerie et une deuxième résistance (R2), et ayant un dispositif de signalisation d'état de boucle (A) relié aux bornes des première et deuxième résistances et délivrant un signal de boucle (SB), ledit circuit d'émission (DE) étant relié par une troisième résistance (R22) à la première résistance (R1) et par une quatrième résistance (R23) à la deuxième résistance (R2), caractérisé par le fait qu'il comprend également :

   - un premier (G) et un deuxième (H) circuits amplificateurs différentiels reliés en entrée audit circuit de réception (DR),

   - un premier circuit amplificateur symétrique (B) relié en sortie du premier circuit amplificateur différentiel (G) par une cinquième résistance (R19) et ayant une sortie reliée à la première résistance (R1),

   - un deuxième circuit amplificateur symétrique (C) relié en sortie du deuxième circuit amplificateur différentiel (H) par une sixième résistance (R20) et ayant une sortie reliée à la deuxième résistance (R2),

   - un premier circuit de réaction (E) en parallèle sur un ensemble constitué par le premier circuit amplificateur symétrique (B) et la première résistance (R1),

   - un deuxième circuit de réaction(F) en parallèle sur un ensemble constitué par le deuxième circuit amplificateur symétrique (C) et la deuxième résistance (R2),

   - un circuit d'équilibrage (J) relié en sortie des premier (G) et deuxième (H) circuits amplificateurs différentiels, à un premier point commun au circuit d'émission (DE) et à la troisième résistance (R22), et à un deuxième point commun au circuit d'émission (DE) et à la quatrième résistance (R23), et

   - un circuit d'alimentation et de filtrage (I) pour filtrer la tension d'une batterie et alimenter par une chaîne d'alimentation les deuxième (C) et premier (B) circuits amplificateurs symétriques, ledit circuit d'alimentation et de filtrage étant relié au potentiel négatif (-48V) de la batterie et ledit premier circuit amplificateur symétrique (8) étant relié au potentiel positif (OV) de la batterie.

2. Dispositif de raccordement selon la revendication 1, caractérisé par le fait que la chaîne d'alimentation est constituée par une première diode zéner d'alimentation (Z4), une septième résistance (R24), un transistor d'alimentation (T6) et une deuxième diode zéner d'alimentation (Z5) en série, la première diode zéner d'alimentation (Z4) ayant sa cathode reliée au potentiel positif, et son anode à la septième résistance, la deuxième diode zéner d'alimentation (Z5) ayant son anode reliée au circuit d'alimentation et de filtrage (I) et sa cathode au transistor d'alimentation (T6) et que le transistor d'alimentation (T6) a sa base reliée au potentiel positif par une diode zéner de protection (Z6), ladite base recevant un signal (B1) pour débloquer le transistor d'alimentation lorsque la boucle d'abonné est fermée.

**3.** Dispositif de raccordement selon la revendication 2, caractérisé par le fait que le dispositif de signalisation d'état de boucle (A) est relié en sortie à un transistor de commande (T5) ayant son collecteur relié d'une part à la base du transistor d'alimentation (T6) et d'autre part au potentiel négatif de la batterie par une résistance de collecteur (R14), ledit transistor de commande délivrant ledit signal (B1).

**4.** Dispositif de raccordement selon la revendication 2 caractérisé par le fait que le premier circuit amplificateur symétrique (B) comprend la première diode zéner d'alimentation (Z4), un premier amplificateur (1) ayant une entrée positive reliée d'une part au premier circuit amplificateur différentiel (G) par la cinquième résistance (R19) et d'autre part au premier circuit de réaction (E), une entrée négative reliée au premier contact fixe (s11), un premier transistor (T2) ayant son émetteur relié audit premier contact fixe, son collecteur relié au potentiel positif (OV) de la batterie, et sa base reliée par une huitième résistance (R46) en sortie du premier amplificateur (1), une diode zéner de protection (Z3) en parallèle sur le premier transistor (T2), le premier amplificateur (1) ayant des bornes d'alimentation reliées en parallèle sur la première diode zéner d'alimentation (Z4).

**5.** Dispositif de raccordement selon la revendication 2, caractérisé par le fait que le deuxième circuit amplificateur (C) comprend la deuxième diode zéner d'alimentation (Z5), un deuxième amplificateur (2) ayant une entrée positive reliée d'une part au deuxième circuit amplificateur différentiel (H) par la sixième résistance (R20) et d'autre part au deuxième circuit de réaction (F), une entrée négative reliée par une neuvième résistance (R25) au deuxième contact fixe (s21), un deuxième transistor (T1) ayant son émetteur relié au deuxième contact fixe (s21), sa base reliée par une dixième résistance (R26) en sortie du deuxième amplificateur (2), et son collecteur relié par le circuit d'alimentation et de filtrage (I) au potentiel négatif (-48V) de la batterie, le deuxième amplificateur (2) ayant des bornes d'alimentation reliées en parallèle sur le deuxième diode zéner d'alimentation (Z5).

**6.** Dispositif de raccordement selon la revendication 2, caractérisé par le fait que le circuit d'alimentation et de filtrage (I) comprend un troisième transistor (T3) ayant son émetteur relié par une onzième résistance (R29) au potentiel négatif (-48V), et un quatrième transistor (T4) ayant son collecteur relié au potentiel négatif, son émetteur relié à la chaîne d'alimentation, et sa base reliée à son émetteur par une première diode (D4), au potentiel positif (OV) par un condensateur de filtrage (C11), et au collecteur du troisième transistor (T3), que l'émetteur du quatrième transistor (T4) est relié par une douzième résistance (R27) en série avec une deuxième (D5), une troisième (D6) et une quatrième (D7) diodes au potentiel négatif (-48V) et que le troisième transistor (T3) à sa base reliée par une treizième résistance (R28) à un premier condensateur (C12) lui-même en parallèle sur les troisième et quatrième diodes (D6, D7).

**7.** Dispositif de raccordement selon la revendication 2, caractérisé par le fait que le premier circuit amplificateur différentiel (G) comprend un troisième amplificateur (4) ayant une entrée positive reliée par une quatorzième résistance (R32) en série avec un deuxième condensateur (C5) à la sortie du circuit de réception (DR) et par une quinzième résistance (R36) d'une part à l'anode de la première diode zéner d'alimentation (Z4) à travers une seizième résistance (R42) et d'autre part au potentiel positif à travers une dixseptième résistance (R43), et une entrée négative reliée d'une part à sa sortie par une dixhuitième résistance (R37) et d'autre part à la masse par une dixneuvième résistance (R33) en série avec un troisième condensateur (C6), ledit troisième amplificateur (4) ayant des bornes d'alimentation reliées en parallèle sur la première diode zéner d'alimentation (Z4).

**8.** Dispositif de raccordement selon la revendication 2, caractérisé par le fait que le deuxième circuit amplificateur différentiel (H) comprend un pont diviseur constitué par une vingtième (R40) et une vingt-et-unième (R41) résistances en série, ledit pont diviseur étant connecté en parallèle sur la deuxième diode zéner d'alimentation (Z5), et un quatrième amplificateur (5) ayant une entrée négative reliée d'une part à sa sortie par une vingt-deuxième résistance (R38) et d'autre part en sortie du circuit de réception (DR) par une vingt-troisième résistance (R34) en série avec un quatrième condensateur (C7), et une entrée positive reliée d'une part audit pont diviseur par une vingt-quatrième résistance (R39) et d'autre part à la masse par une vingt-cinquième résistance (R35) en série avec un cinquième condensateur (C8), ledit quatrième amplificateur (5) ayant des bornes d'alimentation reliées en parallèle sur la deuxième diode zéner d'alimentation (Z5).

9. Dispositif de raccordement selon la revendication 1, caractérisé par le fait que les premier et deuxième circuits de réaction (E ; F) sont constitués chacun par une résistance (R17 ; R18) et un condensateur (C3 ; C4) en série.

10. Dispositif de raccordement selon la revendication 1, caractérisé par le fait que le deuxième contact fixe (s21) du relais de sonnerie est relié d'une part au potentiel positif (OV) par une cinquième diode (D3) et d'autre part au potentiel négatif (-48V) par une sixième diode (D8).

11. Dispositif de raccordement selon la revendication 1, caractérisé par le fait que le circuit d'émission (DE) comporte un sixième (C9) et un septième (C10) condensateurs en entrée, le sixième condensateur étant relié à la troisième résistance (R22) et le septième condensateur étant relié à la quatrième résistance (R23).

12. Dispositif de raccordement selon la revendication 1, caractérisé par le fait que le circuit d'équilibrage (J) comporte une vingt-sixième résistance (R30) connectée entre la sortie du premier circuit amplificateur différentiel (G) et ledit premier point commun, et une vingt-septième résistance (R31) connectée entre la sortie du deuxième circuit amplificateur différentiel (H) et ledit deuxième point commun.

**Claims**

1. A subscriber line connection circuit connected to a transmission circuit (DE) and to a reception circuit (DR), connected to one line wire via a first fixed contact (s11), a first moving contact (s1) of a ringing relay (RS) and a first resistor (R1), and to the other line wire via a second fixed contact (s21), a second moving contact (s2) of said ringing relay, and a second resistor (R2), and including a loop state signalling circuit (A) connected to the terminals of the first and second resistors and delivering a loop signal (SB), said transmission circuit (DE) being connected via a third resistor (R22) to the first resistor (R1) and via a fourth resistor (R23) to the second resistor (R2), the connection circuit being characterized by the fact that it also comprises:

first and second differential amplifier circuits (G, H) having their inputs connected to said reception circuit (DR);

a first symmetrical amplifier circuit (B) connected to the output of the first differential amplifier circuit (G) via a fifth resistor (R19) and having an output connected to the first resistor (R1);

a second symmetrical amplifier circuit (C) connected to the output of the second differential amplifier circuit (H) via a sixth resistor (R20) and having an output connected to the second resistor (R2);

a first feedback circuit (E) connected in parallel with an ensemble constituted by the first symmetrical amplifier circuit (B) and the first resistor (R1);

a second feedback circuit (F) connected in parallel with an ensemble constituted by the second symmetrical amplifier circuit (C) and the second resistor (R2);

a balancing circuit (J) connected to the outputs of the first and second differential amplifier circuit (G, H) and to a point common to the transmit circuit (DE) and the third resistor (R22), and to a second point common to the transmit circuit (DE) and the fourth resistor (R33); and

a power supply and filter circuit (I) for filtering the voltage from a battery and for powering the second and first symmetrical amplifier circuits (C, B) via a power supply series connection, said power supply and filtering circuit being connected to the negative potential (-48V) of the battery and said first symmetrical amplifier circuit (B) being connected to the positive potential (0V) of the battery.

2. A connection circuit according to claim 1, characterized by the fact that the power supply series connection is constituted by a first power supply zener diode (Z4), a seventh resistor (R24), a power supply transistor (T6), and a second power supply zener diode (Z5), the first power supply zener diode (Z4) having its cathode connected to the positive potential and its anode connected to a seventh resistor, the second power supply zener diode (Z5) having its anode connected to the power supply and filter circuit (I) and its cathode connected to the power supply transistor (T6), and the power supply transistor (T6) having its base connected to the positive potential via a protective zener diode (Z6), said base receiving a signal B1 for switching on the power supply transistor when the subscriber loop is looped.

3. A connection circuit according to claim 2, characterized by the fact that the loop state signalling circuit (A) has its output connected to a control transistor (T5) having its collector connected firstly to the base of the power supply transistor (T6) and secondly to the negative battery potential via a collector resistor (R14), said control transistor delivering said signal B1.

4. A connection circuit according to claim 2, characterized by the fact that the first symmetrical amplifier circuit (B) comprises the first power supply zener diode (Z4), a first amplifier (1) having a positive input connected firstly to the first differential amplifier circuit (G) via the fifth resistor (R19) and secondly to the first feedback circuit (E), a negative input connected to the first fixed contact (s11), a first transistor (T2) having its emitter connected to said first fixed contact, its collector connected to the positive battery potential (0V), and its base connected via an eighth resistor (R46) to the output from the first amplifier (1), and a protective zener diode (Z3) in parallel with the first transistor (T2), the first amplifier (1) having its power supply terminals connected in parallel with the first power supply zener diode (Z4).

5. A connection circuit according to claim 2, characterized by the fact that the second symmetrical amplifier circuit (C) comprises the second power supply zener diode (Z5), a second amplifier (2) having a positive input connected firstly to the second differential amplifier circuit (H) via the sixth resistor (R20) and secondly to the second feedback circuit (F), a negative input connected via a ninth resistor (R35) to the second fixed contact (s21), and a second transistor (T1) having its emitter connected to the second fixed contact (s21), its base connected via a tenth resistor (R26) to the output from the second amplifier (2), and its collector connected via the power supply and filter circuit (I) to the negative battery potential (-48V), the second amplifier (2) having its power supply terminal connected in parallel with the second power supply zener diode (25).

6. A connection circuit according to claim 2, characterized by the fact that the power supply and filter circuit (I) comprises a third transistor (T3) having its emitter connected via an eleventh resistor (R29) to the negative potential (-48V), and a fourth transistor (T4) having its collector connected to the negative potential, its emitter connected to the power supply series connection, and its base connected to its emitter via a first diode (D4), to the positive potential (0V) via a filter capacitor (C11), and to the collector of the third transistor (T3), that the emitter of the fourth transistor (C4) is connected via a twelfth resistor (R27) in series with a second, a third, and a fourth diode (D5, D6, and D7) to the negative potential (-48V), and that the third transistor (T3) has its base connected via a thirteenth resistor (R28) to a first capacitor (C12) itself connected in parallel with the third and fourth diodes (D6, D7).

7. A connection circuit according to claim 2, characterized by the fact that the first differential amplifier circuit (G) comprises a third amplifier (4) having a positive input connected via a fourteenth resistor (R32) in series with a second capacitor (C5) to the output from the reception circuit (DR) and via a fifteenth resistor (R36) firstly to the anode of the first power supply zener diode (Z4) via a sixteenth resistor (R42) and secondly to the positive potential via a seventeenth resistor (R43), and a negative input connected firstly to its output via an eighteenth resistor (R37) and secondly to ground via a nineteenth resistor (R33) in series with a third capacitor (C6), said third amplifier (4) having power supply terminals connected in parallel with the first power supply zener diode (Z4).

8. A connection circuit according to claim 2, characterized by the fact that the second differential amplifier circuit (H) comprises a divider bridge constituted by a twentieth resistor (R40) and a twenty-first resistor (R41) connected in series, said divider bridge being connected in parallel with the second power supply zener diode (Z5), and a fourth amplifier (5) having a negative input connected firstly to its output via a twenty-second resistor (R38) and secondly to the output of the reception circuit (DR) via a twenty-third resistor (R34) in series with a fourth capacitor (C7), and a positive input connected firstly to said divider bridge via a twenty-fourth resistor (R39) and secondly to ground via a twenty-fifth resistor (R35) in series with a fifth capacitor (C8), said fourth amplifier (5) having its power supply terminals connected in parallel with the second power supply zener diode (Z5).

9. A connection circuit according to claim 1, characterized by the fact that the first and second feedback circuits (E, F) are each constituted by a resistor (R17, R18) connected in series with a capacitor (C3, C4).

10. A connection circuit according to claim 1, characterized by the fact that the second fixed contact (s21) of the ringing relay is connected firstly to the positive potential (0V) via a fifth diode (D3) and secondly to the negative potential (-48V) via a sixth diode (D8).

11. A connection circuit according to claim 1, characterized by the fact that the transmit circuit (DE) includes sixth and seventh input capacitors (C9, C10) with the sixth capacitor being connected to the third resistor (R32) and with the seventh capacitor being connected to the fourth resistor (R23).

12. A connection circuit according to claim 1, characterized by the fact that the balancing circuit (J) comprises a twenty-sixth resistor (R30) connected between the output of the first differential amplifier circuit (G) and said first common point, and a twenty-seventh resistor (R31) connected between the output of the second differential amplifier circuit (H) and said second common point.

**Patentansprüche**

1. Anschlußvorrichtung für eine Teilnehmerleitung, die an einen Sendekreis (DE) und einen Empfangskreis (DR), an einen Leitungsdraht über einen ersten festen Kontakt (s11), einen ersten beweglichen Kontakt (s1) eines Klingelrelais (RS) und einen ersten Widerstand (R1), an einen anderen Leitungsdraht über einen zweiten festen Kontakt (s21), einen zweiten beweglichen Kontakt (s2) des Klingelrelais und einen zweiten Widerstand (R2) angeschlossen ist und eine Signalisationsvorrichtung für den Schleifenzustand (A) enthält, die an die Klemmen des ersten und des zweiten Widerstands angeschlossen ist und ein Schleifensignal (SB) liefert, wobei der Sendekreis (DE) über einen dritten Widerstand (R22) an den ersten Widerstand (R1) und über einen vierten Widerstand (23) an den zweiten Widerstand (R2) angeschlossen ist, dadurch gekennzeichnet, daß die Anschlußvorrichtung weiter enthält:
   - eine erste (G) und eine zweite Differentialverstärkerschaltung (H), die beide an den Eingang des Empfangskreises (DR) angeschlossen sind,
   - eine erste symmetrische Verstärkerschaltung (B), die an den Ausgang der ersten Differentialverstärkerschaltung (G) über einen fünften Widerstand (R19) und mit einem Ausgang an den ersten Widerstand (R1) angeschlossen ist,
   - eine zweite symmetrische Verstärkerschaltung (C), die an den Ausgang der zweiten Differentialverstärkerschaltung (H) über einen sechsten Widerstand (R20) angeschlossen ist und mit einem Ausgang am zweiten Widerstand (R2) liegt,
   - einen ersten Rückkopplungskreis (E) parallel zu einer aus der ersten symmetrischen Verstärkerschaltung (B) und dem ersten Widerstand (R1) gebildeten Einheit,
   - einen zweiten Rückkopplungskreis (F) parallel zu einer von der zweiten symmetrischen Verstärkerschaltung (C) und dem zweiten Widerstand (R2) gebildeten Einheit,
   - eine Hybridweiche (J), die an den Ausgang der ersten (G) und der zweiten Differentialverstärkerschaltung (H) sowie an einen ersten Verbindungspunkt zwischen dem Sendekreis (DE) und dem dritten Widerstand (R22) und an einen zweiten Verbindungspunkt zwischen dem Sendekreis (DE) und dem vierten Widerstand (R23) angeschlossen ist,
   - eine Speise- und Filterschaltung (I), um die Spannung einer Batterie zu filtern und über eine Speisekette die zweite (C) und erste symmetrische verstärkerschaltung (B) zu speisen, wobei die Speise- und Filterschaltung an das negative Potential (-48V) der Batterie und die erste symmetrische Verstärkerschaltung (B) an das positive Potential (OV) der Batterie angeschlossen ist.

2. Anschlußvorrichtung nach Anspruch 1, dadurch gekennzeichnet, daß die Speisekette aus einer ersten Zenerdiode (Z4) zur Speisung, einem siebten Widerstand (R24), einem Speisetransistor (T6) und einer zweiten Zenerdiode (Z5) zur Speisung in Serie besteht, wobei die erste Zenerdiode (Z4) mit ihrer Kathode am positiven Potential und mit ihrer Anode am siebten Widerstand liegt, während die zweite Zenerdiode (Z5) mit ihrer Anode an der Speise- und Filterschaltung (I) sowie mit ihrer Kathode am Speisetransistor (T6) liegt, und daß der Speisetransistor (T6) mit seiner Basis an das positive Potential über eine Zenerdiode (Z6) zum Schutz angeschlossen ist und ein Signal (B1) zur Entsperrung des Speisetransistors empfängt, wenn die Teilnehmerschleife geschlossen ist.

3. Anschlußvorrichtung nach Anspruch 2, dadurch gekennzeichnet, daß die Vorrichtung zur Signalisierung des Schleifenzustands (A) ausgangsseitig an einen Steuertransistor (T5) angeschlossen ist, dessen Kollektor einerseits mit der Basis des Speisetransistors (T6) und andererseits mit dem negativen Potential der Batterie über einen Kollektorwiderstand (R14) verbunden ist, wobei der Steuertransistor das Signal (B1) liefert.

4.  Anschlußvorrichtung nach Anspruch 2, dadurch gekennzeichnet, daß die erste symmetrische Verstärkerschaltung eine erste Zenerdiode (Z4) zur Speisung, einen ersten Verstärker (1), dessen positiver Eingang einerseits mit der ersten Differentialverstärkerschaltung (G) über den fünften Widerstand (R19) und andererseits an den ersten Rückkopplungskreis (E) angeschlossen ist, dessen negativer Eingang an den ersten Festkontakt (s11) angeschlossen ist, einen ersten Transistor (T2), dessen Emitter mit dem ersten Festkontakt verbunden ist, dessen Kollektor mit dem positiven Potential (0 V) der Batterie verbunden ist und dessen Basis mit einem achten Widerstand (R46) am Ausgang des ersten Verstärkers (1) verbunden ist, und eine Zenerdiode (Z3) zum Schutz parallel zum ersten Transistor (T2) enthält, wobei der erste Verstärker (1) mit seinen Speiseklemmen parallel an der ersten Zenerdiode (Z4) liegt.

5.  Anschlußvorrichtung nach Anspruch 2, dadurch gekennzeichnet, daß die zweite Verstärkerschaltung (C) die zweite Zenerdiode (Z5) zur Speisung, einen zweiten Verstärker (2), dessen positiver Eingang einerseits mit der zweiten Differentialverstärkerschaltung (H) über den sechsten Widerstand (R20) und andererseits mit dem zweiten Rückkopplungskreis (F) verbunden ist, dessen negativer Eingang über einen neunten Widerstand (R25) mit dem zweiten Festkontakt (S21) verbunden ist, wobei ein zweiter Transistor (T1) mit seinem Emitter am zweiten Festkontakt (S21), mit seiner Basis an einem zehnten Widerstand (R26) am Ausgang des zweiten Verstärkers (2) und mit seinem Kollektor über die Speise- und Filterschaltung (I) am negativen Potential (-48 V) der Batterie liegt und wobei der zweite Verstärker (2) mit seinen Speiseklemmen parallel zur zweiten Zenerdiode (Z5) liegt.

6.  Anschlußvorrichtung nach Anspruch 2, dadurch gekennzeichnet, daß die Speise- und Filterschaltung (I) einen dritten Transistor (T3), der mit seinem Emitter über einen elften Widerstand (R29) am negativen Potential (-48 V) liegt, und einen vierten Transistor (T4) enthält, der mit seinem Kollektor am negativen Potential, mit seinem Emitter an der Speisekette und seiner Basis an seinem eigenen Emitter über eine erste Diode (D4), am positiven Potential (0 V) über einen Filterkondensator (C11) und am Kollektor des dritten Transistors (T3) liegt, daß der Emitter des vierten Transistors (T4) über einen zwölften Widerstand (R27) in Reihe mit einer zweiten (D5), einer dritten (D6) und einer vierten Diode (D7) am negativen Potential (-48 V) liegt, und daß der dritten Transistor (T3) mit seiner Basis über einen dreizehnten Widerstand (R28) an einen ersten Kondensator (C12) angeschlossen ist, der seinerseits parallel zur dritten und vierten Diode (D6 und D7) liegt.

7.  Anschlußvorrichtung nach Anspruch 2, dadurch gekennzeichnet, daß die erste Differentialverstärkerschaltung (G) einen dritten Verstärker (4) enthält, der mit einem positiven Eingang über einen vierzehnten Widerstand (R32) in Reihe mit einem zweiten Kondensator (C5) am Ausgang des Empfangskreises (DR) und über einen fünfzehnten Widerstand (R36) einerseits an der Diode der ersten Zenerdiode (Z4) über einen sechzehnten Widerstand (R42) und andererseits am positiven Potential über einen siebzehnten Widerstand (R43) liegt, während ein negativer Eingang des dritten Verstärkers (4) einerseits mit seinem Ausgang über eine achtzehnten Widerstand (R37) verbunden ist und andererseits an Masse über einen neunzehnten Widerstand R33) in Reihe mit einem dritten Kondensator (C6) liegt, wobei der dritte Verstärker (4) mit seinem Speiseklemmen parallel an der ersten Zenerdiode (Z4) liegt.

8.  Anschlußvorrichtung nach Anspruch 2, dadurch gekennzeichnet, daß die zweite Differentialverstärkerschaltung (H) einen Spannungsteiler bestehend aus einem zwanzigsten und einem einundzwanzigsten Widerstand (R40, R41) in Reihe enthält, wobei der Spannungsteiler parallel zur zweiten Zenerdiode (Z5) liegt, und einen vierten Verstärker (5) enthält, dessen negativer Eingang einerseits an seinen Ausgang über einen zweiundzwanzigsten Widerstand (R38) und andererseits an den Ausgang des Empfangskreises (DR) über einen dreiundzwanzigsten Widerstand (R34) in Reihe mit einem vierten Kondensator (C7) angeschlossen ist, während ein positiver Eingang des vierten Verstärkers (5) einerseits mit dem Spannungsteiler über einen vierundzwanzigsten Widerstand (R39) und andererseits mit Masse über einen fünfundzwanzigsten Widerstand (R35) in Reihe mit einem fünften Kondensator (C8) verbunden ist, wobei der vierte Verstärker (5) mit seinen Speiseklemmen parallel an der zweiten Zenerdiode (Z5) liegt.

9.  Anschlußvorrichtung nach Anspruch 1, dadurch gekennzeichnet, daß der erste und der zweite Rückkopplungskreis (E, F) je aus einem Widerstand (R17, R18) und einem Kondensator (C3, C4) in Reihe besteht.

10. Anschlußvorrichtung nach Anspruch 1, dadurch gekennzeichnet, daß der zweite Festkontakt (s21) des Klingelrelais einerseits mit dem positiven Potential (0 V) über eine fünfte Diode (D3) und andererseits mit dem negativen Potential (-48 V) über eine sechste Diode (D8) verbunden ist.

11. Anschlußvorrichtung nach Anspruch 1, dadurch gekennzeichnet, daß der Sendekreis (DE) einen sechsten und einen siebten Kondensator (C9, C10) am Eingang besitzt, wobei der sechste Kondensator mit dem dritten Widerstand (R22) und der siebte Kondensator mit dem vierten Widerstand (R23) verbunden ist.

12. Anschlußvorrichtung nach Anspruch 1, dadurch gekennzeichnet, daß die Hybridweiche (J) einen sechsundzwanzigsten Widerstand (R30), der zwischen den Ausgang der ersten Differentialverstärkerschaltung (G) und den ersten gemeinsamen Punkt geschaltet ist, und einen siebenundzwanzigsten Widerstand (R31) besitzt, der zwischen den Ausgang der zweiten Differentialverstärkerschaltung (H) und den zweiten gemeinsamen Punkt geschaltet ist.

FIG. 1

EP 0 381 105 B1

14

# FIG. 2